# EUROPEAN PATENT APPLICATION

(11) **EP 4 764 682 A1**
(43) Date of publication of application: **24.06.2026**
(21) Application number: 25223452.1
(22) Date of filing: 15.12.2025
(51) Int. Cl.: G02F 1/1333

(54) **DISPLAY DEVICE**

(30) Priority: 17.12.2024 KR 20240187957
(71) Applicant: LG Display Co., Ltd., Seoul, 07336 (KR)
(72) Inventor: KIM, Nam Woo, 10845 Paju-si, Gyeonggi-do (KR); PAEK, Seung Han, 10845 Paju-si, Gyeonggi-do (KR); HYUN, Myeong Hak, 10845 Paju-si, Gyeonggi-do (KR); YOON, Kyung Jae, 10845 Paju-si, Gyeonggi-do (KR); HAN, Jeon Phill, 10845 Paju-si, Gyeonggi-do (KR)
(74) Representative: Viering, Jentschura & Partner mbB Patent- und Rechtsanwälte

(57) **Abstract**

The present disclosure discloses a display device (10) including: a first glass substrate (110) including a display area (DA) and a non-display area (NDA) having a bezel area (BZ) surrounding the display area (DA) and a bending area (BA); a second glass substrate (210) provided above the first glass substrate (110) so as to overlap the first glass substrate (110) with a certain gap therebetween; a first sub-glass substrate (120) provided below the first glass substrate (110) of the non-display area (NDA) so as to overlap the first glass substrate (110) with the bending area (BA) therebetween; a protective layer (114, 116) provided to overlap the bending area (BA) and the bezel area (BZ); first and second accommodating portions (EH1, EH2) overlapping the protective layer (114, 116) and provided on rear surfaces (110d, 120d) of the first glass substrate (110) and the first sub-glass substrate (120); a third accommodating portion (EH3) provided in the non-display area (NDA) of the second glass substrate (210); and a coating layer (172, 174, 290) positioned in the first to third accommodating portions (EH1, EH2, EH3).

## Description

### TECHNICAL FIELD

The present specification relates to a display device.

### BACKGROUND

In general, display devices are widely used as display screens of various electronic devices, such as mobile communication terminals, electronic notebooks, e-books, portable multimedia players (PMPs), navigation devices, ultra-mobile PCs (UMPCs), mobile phones, tablet PCs, watch phones, electronic pads, wearable devices, portable information devices, vehicle control display devices, televisions, laptops, and monitors.

Recently, research and development have been conducted to achieve a maximum screen size by reducing a bezel area, in which images are not displayed, within the same overall size of a display panel.

### SUMMARY

An object of the present specification is to provide a display device capable of improving the edge rigidity of a thin film transistor array substrate and a color filter array substrate.

The objectives of the present specification are not limited to those described above, and other objectives not explicitly mentioned will be clearly understood by those skilled in the art from the following description. According to an aspect of the present disclosure, a display device according to claim 1 is provided. Further embodiments are described in the dependent claims.

A display device according to at least one embodiment of the present specification may include: a first glass substrate including a display area and a non-display area having a bezel area surrounding the display area and a bending area; a second glass substrate provided above the first glass substrate so as to overlap the first glass substrate with a gap therebetween; a first sub-glass substrate provided below the first glass substrate of the non-display area so as to overlap the first glass substrate with the bending area therebetween; a protective layer provided to overlap the bending area and the bezel area; first and second accommodating portions overlapping the protective layer and provided on rear surfaces of each of the first glass substrate and the first sub-glass substrate; a third accommodating portion provided in the non-display area of the second glass substrate; and a coating layer positioned in the first to third accommodating portions.

A display device according to at least one embodiment of the present specification may include: a first glass substrate including a bezel area and a bending area overlapping an etching hole region, and a display area surrounded by the bezel area; a second glass substrate provided above the first glass substrate so as to overlap the first glass substrate with a gap therebetween; a first sub-glass substrate provided below the first glass substrate so as to overlap the first glass substrate with the bending area therebetween; a thin film transistor provided on the first glass substrate; a black matrix and a color filter layer provided on the second glass substrate; a liquid crystal layer positioned between the first glass substrate and the second glass substrate; a protective layer provided on the first glass substrate and the first sub-glass substrate in the bending area and the bezel area overlapping the etching hole region; a first slope and a second slope overlapping the protective layer and provided on rear surfaces of each of the first glass substrate and the first sub-glass substrate; a third slope provided in the bezel area of the second glass substrate; and a coating layer positioned on the first slope, the second slope, and the third slope.

According to the present specification, by performing chemical etching on a thin film transistor substrate and a color filter substrate to separate cells using laser cutting, the rigidity of the edges of the first glass substrate and the second glass substrate may be improved.

According to the present specification, scribing and grinding for separating cells, which may cause damage to the protective layer due to foreign substances, water spray, vibration, or breaking, may be replaced with laser cutting to separate the cells, thereby preventing cracks in the protective layer and wiring caused by foreign substances, vibration, water spray, or breaking.

### BRIEF DESCRIPTION OF THE DRAWINGS

The above and other objects, features, and advantages of the present disclosure will become more apparent to those of ordinary skill in the art by describing exemplary embodiments thereof in detail with reference to the attached drawings, in which:
FIG. 1 is a schematic block diagram of a display device according to one embodiment of the present specification;
FIG. 2 is a perspective view of a display device according to one embodiment of the present specification;
FIG. 3 is a cross-sectional view taken along line I-I' of FIG. 2;
FIG. 4 is an exploded perspective view of a display device according to one embodiment of the present specification;
FIG. 5 is a plan view showing a rear surface of a first glass substrate in a display device according to one embodiment of the present specification;
FIG. 6 is a plan view showing a top surface of a second glass substrate in a display device according to one embodiment of the present specification;
FIG. 7 is a flowchart illustrating a manufacturing process of a display device according to one embodiment of the present specification;
FIGS. 8A to 8F are cross-sectional views illustrating manufacturing processes of a display device according to one embodiment of the present specification; and
FIG. 9 is a cross-sectional view of a display device in a folded state according to one embodiment of the present specification.

### DETAILED DESCRIPTION OF EXEMPLARY EMBODIMENTS

The advantages and features of the present specification, and methods of achieving them will become apparent upon reference to the embodiments described in detail below in conjunction with the accompanying drawings. However, the present specification is not limited to the following embodiments, but may be implemented in various different forms; rather, the present embodiments are provided to make the description of the present specification complete and to allow those skilled in the art to fully understand the scope of the present specification, and the present specification is defined only within the scope of the appended claims.

The shapes, sizes, proportions, angles, numbers, and the like of elements shown in the drawings to illustrate embodiments of the present specification are exemplary and are not limited to the matters described in the present specification. Further, in describing the present specification, detailed descriptions of related known technologies may be omitted so as not to obscure the essence of the present specification.

The terms such as "including," "having," and "consisting of" used herein are generally intended to allow other components to be added unless the terms are used with the term "only." References to components of a singular noun include the plural of that noun, unless specifically stated otherwise.

In the interpretation of components, they are construed to include margins of error, even if not explicitly stated.

When describing positional relationships, for example, using terms like "on," "above," "below," or "on the side of," unless "directly" or "immediately" is specified, one or more other components may be positioned between the two parts.

When an element or layer is referred to as being "on" another element or layer, it includes both cases where it is directly on the other element or where another layer or another element is interposed in between.

In addition, the first, second, etc. are used to describe various components, but these components are not limited by these terms. These terms are used only to distinguish one component from another. Therefore, the first component referred to below may be a second component within the technical spirit of the present specification.

Identical reference numerals may designate identical components throughout the description.

The sizes and thicknesses of each configuration shown in the drawings are illustrated for convenience of explanation and are not necessarily limited to the sizes and thicknesses of the configurations shown in the present specification.

The features of the various embodiments described in this specification may be partially or wholly combined or integrated with each other, and may be technically interlinked and operated in various ways, wherein each embodiment may be implemented independently of one another or in conjunction with one another in a related manner.

Hereinafter, an organic light emitting display device according to an embodiment of the present specification will be described with reference to the accompanying drawings.

In the following description, detailed descriptions of well-known functions or configurations related to the present specification will be omitted or briefly mentioned when it is determined that such detailed descriptions may unnecessarily obscure the subject matter of the present specification.

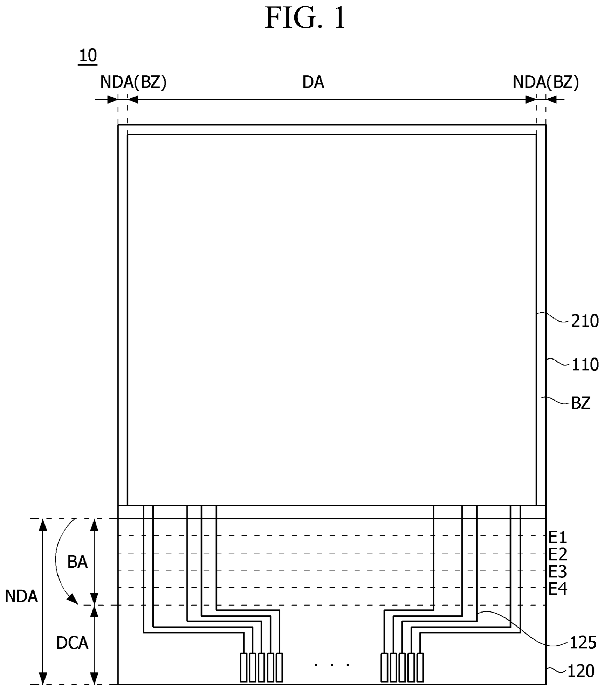

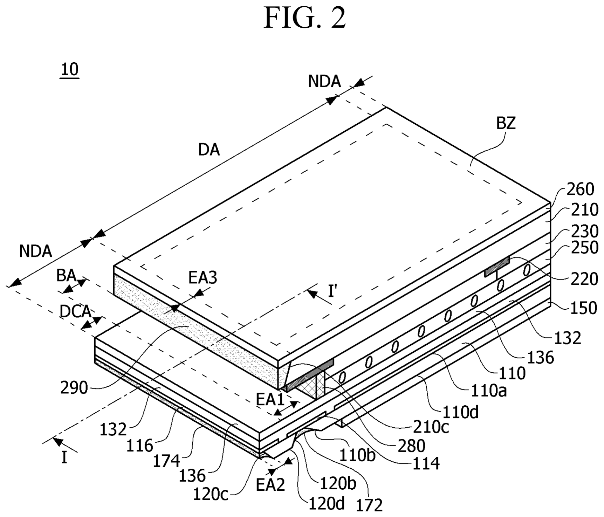

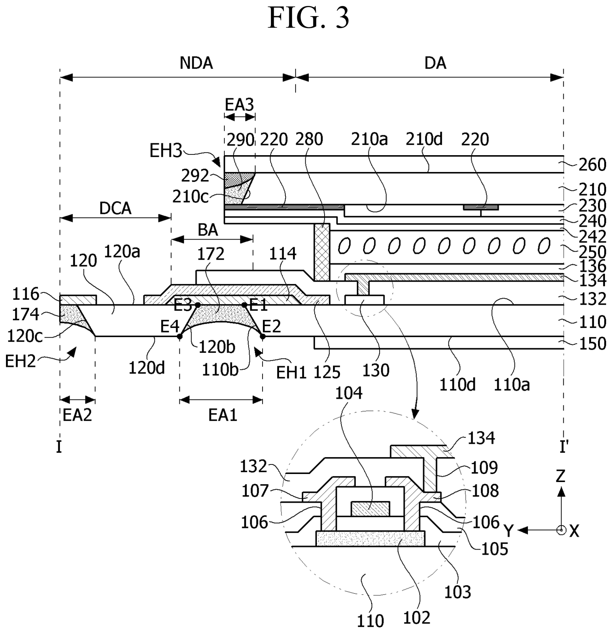

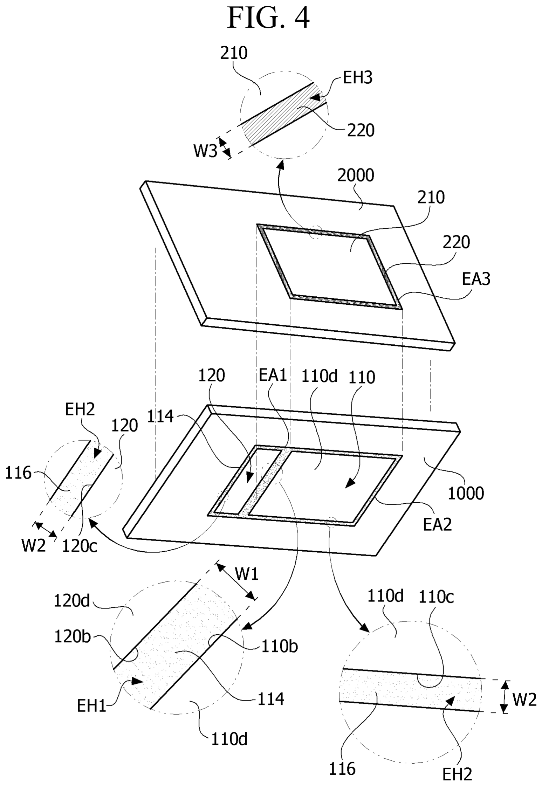

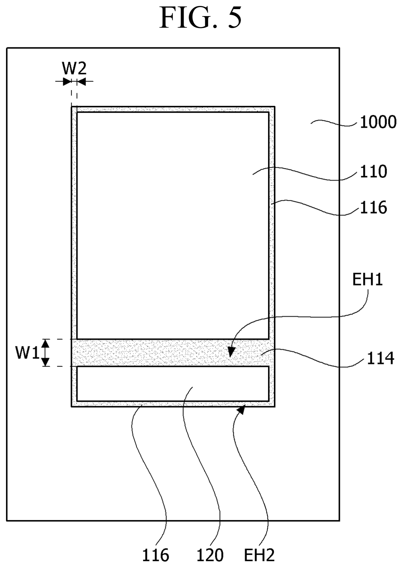

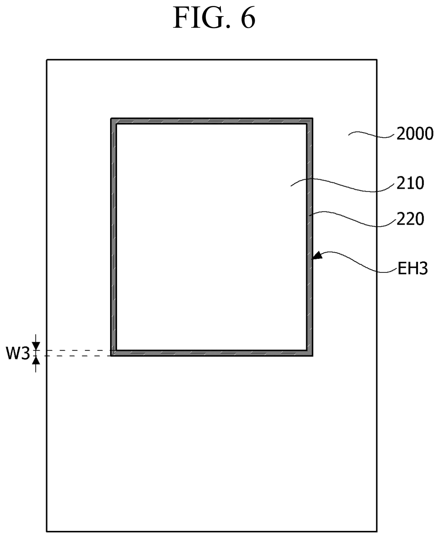

FIG. 1 is a schematic block diagram of a display device according to one embodiment of the present specification. FIG. 2 is a perspective view of a display device according to one embodiment of the present specification. FIG. 3 is a cross-sectional view taken along line I-I' of FIG. 2. FIG. 4 is an exploded perspective view of a display device according to one embodiment of the present specification. FIG. 5 is a plan view showing a rear surface of a first glass substrate in a display device according to one embodiment of the present specification. FIG. 6 is a plan view showing a top surface of a second glass substrate in a display device according to one embodiment of the present specification.

A display device 10 of the present specification may be a liquid crystal display device (LCD), a plasma display panel device (PDP), a field emission display device (FED), an electroluminescence display device (ELD), or an organic light emitting diode (OLED), but in the present specification, a liquid crystal display device that uses a backlight unit or a micro LED as a light source will be described as an example. However, the present specification is not limited thereto.

The display device 10 of the present specification may include a first glass substrate 110, which is a thin film transistor array substrate provided with a thin film transistor 130, a gate line, a data line, and a pixel electrode 134; a second glass substrate 210, which is a color filter array substrate provided with a color filter layer 230; a liquid crystal layer 250 filled between the two substrates 110 and 210; a first polarizing film 150 positioned on a first rear surface 110d of the first glass substrate 110; and a second polarizing film 260 positioned on a third rear surface 210d of the second glass substrate 210. The display device 10 may further include a light source (not shown) positioned below the first glass substrate 110 and configured to emit light toward the upper side of the first glass substrate 110.

Referring to FIGS. 1 to 4, the display device 10 may include a display area DA, and a non-display area NDA that includes a bending area BA and a bezel area BZ surrounding the display area DA. The non-display area NDA may be positioned to surround the display area DA.

The display device 10 may include the first glass substrate 110, the second glass substrate 210, and a first sub-glass substrate 120.

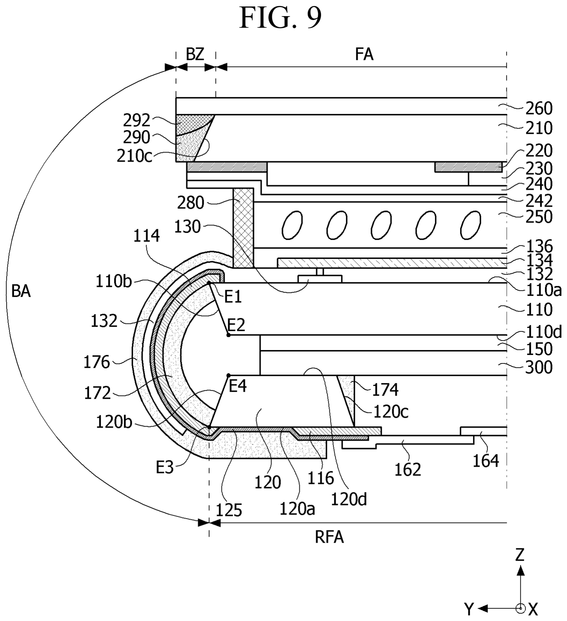

When the bending area BA is in a bent state (folded state), the first glass substrate 110 and the second glass substrate 210 may be positioned to face each other vertically and spaced apart vertically with a gap therebetween in the display area DA. An example of the bent state is shown in FIG. 9.

Moreover, in the bent state (folded state), the first sub-glass substrate 120 may be positioned below the first glass substrate 110 with the bending area BA interposed therebetween so as to overlap the first glass substrate 110. Again, an example of this bent state is shown in FIG. 9.

By contrast, in an unbent state (unfolded state) of the bending area BA, the first sub-glass substrate 120 may be positioned on the outer side of the first glass substrate 110 or the second glass substrate 210, as shown in FIG. 3.

The first and second glass substrates 110 and 210 and the first sub-glass substrate 120 may include a glass material. Each of the first glass substrate 110 and the first sub-glass substrate 120 may have a thickness in a range of 0.01 mm to 1.0 mm in order to maintain the flatness of a first flat surface 110a and a second flat surface 120a, or to block moisture or oxygen from penetrating into the display device 10. The thickness of the first glass substrate 110 and the first sub-glass substrate 120 is not limited thereto and may vary depending on the design conditions of the display device 10.

The display area DA is an area in which an image is displayed and may include a plurality of pixels.

The plurality of pixels may be arranged in a matrix form, and each of the plurality of pixels may include sub-pixels. The display area DA may have a substantially rectangular shape. However, the embodiments of the present specification are not limited thereto, and the display area DA may have any polygonal shape. For example, depending on the shape of the display device, the display area DA may have a triangular, pentagonal, or hexagonal shape. In the present specification, for simplicity of description, the display area DA having a rectangular shape according to the display device 10 having a rectangular shape will be described below.

The non-display area NDA is an area that surrounds the display area DA, and may include elements and circuit wires for driving the display area DA. The non-display area NDA may include the bezel area BZ and a driving circuit area DCA.

The bending area BA may be defined as an area provided to allow a portion of the display device 10 to be bent. Accordingly, the display device 10 may be folded with a certain radius of curvature when the bending area BA is bent.

The display device 10 according to one embodiment of the present specification may have areas defined as a flat area FA (see FIG. 9), the bending area BA, and a rear flat area RFA (see FIG. 9).

The flat area FA may be defined as an area overlapping the first flat surface 110a of the first glass substrate 110. In addition, the flat area FA may overlap the display area DA and may include a predetermined portion of the non-display area NDA surrounding the display area DA.

The rear flat area RFA may be defined as an area overlapping the second flat surface 120a of the first sub-glass substrate 120 and not overlapping the bending area BA. The rear flat area RFA (see FIG. 9) may be provided with a flexible printed circuits (FPC) 162 (see FIG. 9) and a PCB 164 (see FIG. 9). However, the present specification is not limited thereto.

A first accommodating portion EH1 may be located in a first pattern area EA1 in the bending area BA between the first glass substrate 110 and the first sub-glass substrate 120.

The first accommodating portion EH1 may include a first bending slope 110b and a second bending slope 120b.

Here, the first bending slope 110b may be formed on the rear surface of the first glass substrate 110 overlapping the first pattern area EA1, and the second bending slope 120b may be formed on the rear surface of the first sub-glass substrate 120 overlapping the first pattern area EA1.

Referring to FIGS. 4 to 6, a second accommodating portion EH2 may be located in a second pattern area EA2 in the non-display area NDA surrounding the display area DA of the first glass substrate 110. Specifically, the second accommodating portion EH2 may be located in an outer area of the driving circuit area DCA positioned on the left side of the first accommodating portion EH1, and in the non-display area NDA surrounding the display area DA positioned on the right side of the first accommodating portion EH1.

The second accommodating portion EH2 may include a first bezel slope 110c located in the non-display area NDA surrounding the display area DA of the first glass substrate 110, and a second bezel slope 120c located in the non-display area NDA surrounding the driving circuit area DCA of the first sub-glass substrate 120.

Referring to FIGS. 4 to 6, the first accommodating portion EH1 may have a first width W1, and the second accommodating portion EH2 may have a second width W2. The first width W1 of the first accommodating portion EH1 may be equal to or greater than the second width W2 of the second accommodating portion EH2. However, the present specification is not limited thereto. As will be described later, the first width W1 of the first accommodating portion EH1 may be equal to or greater than a third width W3 of a third accommodating portion EH3 formed on a rear surface of the second glass substrate 210. However, the present specification is not limited thereto.

Here, the fact that the first bending slope 110b and the second bending slope 120b of the first accommodating portion EH1 formed in the first pattern area EA1 overlap the bending area BA may mean that the first bending slope 110b and the second bending slope 120b face the rear surface of a first protective layer 114 overlapping the bending area BA. In addition, since the display device has a structure that cannot be bent when the first bending slope 110b and the second bending slope 120b are not provided, the bending area BA of the display device may be defined as overlapping the first bending slope 110b and the second bending slope 120b, which constitute the first accommodating portion EH1.

The first glass substrate 110 may include the first flat surface 110a, the first bending slope 110b located on one side of the first flat surface 110a, and the first bezel slope 110c, and may further include the first rear surface 110d facing the first flat surface 110a.

A first end E1, which is a boundary between the first flat surface 110a and the first bending slope 110b, and a second end E2, which is a boundary between the first bending slope 110b and the first rear surface 110d, may be defined in the first glass substrate 110.

The inclination of the first bending slope 110b may be defined by an inclined surface that connects the first end E1 to the second end E2. Referring to FIGS. 2 and 3, the first bending slope 110b is illustrated as having a cross-section of a straight line shape, but the embodiment of the present specification is not limited thereto.

Here, the first bezel slope 110c and the second bezel slope 120c of the second accommodating portion EH2 formed in the second pattern area EA2 may be located in the bezel area BZ of the non-display area NDA. The first bezel slope 110c and the second bezel slope 120c may be located on the rear surface of a second protective layer 116 positioned in the bezel area BZ. In addition, since the display device has a structure that cannot be cut to separate cells when the first bezel slope 110c and the second bezel slope 120c are not provided, the bezel area BZ of the display device 10 may be defined as overlapping the first bezel slope 110c and the second bezel slope 120c, which constitute the second accommodating portion EH2.

The first sub-glass substrate 120 may include the second flat surface 120a, the second bending slope 120b located on one side of the second flat surface 120a, and the second bezel slope 120c, and may further include a second rear surface 120d facing the second flat surface 120a.

A third end E3, which is a boundary between the second flat surface 120a and the second bending slope 120b, and a fourth end E4, which is a boundary between the second bending slope 120b and the second rear surface 120d, may be defined in the first sub-glass substrate 120.

The inclination of the second bending slope 120b may be defined by an inclined surface that connects the third end E3 to the fourth end E4. Referring to FIGS. 2 and 3, the second bending slope 120b is illustrated as having a cross-section of a straight line shape, but the embodiment of the present specification is not limited thereto.

The first bending slope 110b of the first glass substrate 110 and the second bending slope 120b of the first sub-glass substrate 120 may be referred to as having a reverse taper shape or an undercut structure, as shown in FIG. 3.

Referring to FIGS. 2 and 3, the first protective layer 114 and the second protective layer 116 may be positioned on the non-display area NDA of the first glass substrate 110 and the non-display area NDA of the first sub-glass substrate 120.

Hereinafter, for simplicity of description, the protective layer may be described separately as the first protective layer 114 and the second protective layer 116.

Specifically, the first protective layer 114 may extend from a portion of the end of the first glass substrate 110, across the bending area BA where a first coating layer 172 is located, and onto a portion of the end of the first sub-glass substrate 120.

That is, the first protective layer 114 may overlap the first bending slope 110b and the second bending slope 120b located in the bending area BA.

The second protective layer 116 may be located on the first bezel slope 110c positioned in the bezel area BZ of the non-display area NDA surrounding the display area DA on the right side of the bending area BA.

In addition, the second protective layer 116 may be located on the second accommodating portion EH2 overlapping the second bezel slope 120c formed during etching of the first sub-glass substrate 120 located on the left side of the bending area BA.

That is, the second protective layer 116 may be positioned on the bezel area BZ of the non-display area NDA surrounding the display area DA of the first glass substrate 110 and on the second accommodating portion EH2 of the non-display area NDA surrounding the driving circuit area DCA of the first sub-glass substrate 120.

The first protective layer 114 and the second protective layer 116 may be configured to prevent damage caused by etching of the display device corresponding to the first bending slope 110b and the first bezel slope 110c of the first glass substrate 110, and the second bending slope 120b and the second bezel slope 120c of the first sub-glass substrate 120.

Specifically, the first protective layer 114 may be configured to prevent damage applied inside the panel when forming the first bending slope 110b and the first bezel slope 110c of the first glass substrate 110.

In addition, the second protective layer 116 may be configured to prevent damage applied inside the panel when forming the second bending slope 120b and the second bezel slope 120c of the first sub-glass substrate 120.

Accordingly, the first protective layer 114 may be positioned to overlap the bending area BA of the display device.

The second protective layer 116 may be positioned to overlap the bezel area BZ of the non-display area NDA surrounding the display area DA of the display device or to overlap the driving circuit area DCA. The first protective layer 114 and the second protective layer 116 may be made of either a metal or an organic material. For example, the first protective layer 114 and the second protective layer 116 may include at least one of a silicone-based organic material, urethane, polyimide, and photo-acrylic. In addition, they may include at least one of chromium (Cr), aluminum (Al), platinum (Pt), gold (Au), and nickel (Ni). Specifically, the first protective layer 114 and the second protective layer 116 may be formed of a material having resistance to a glass etchant. The etchant for glass etching may include an etchant containing nitric acid (HNO3) or hydrofluoric acid (HF).

In addition, the first protective layer 114 and the second protective layer 116 may be made of different materials.

The first protective layer 114 and the second protective layer 116 may, for example, be configured as a single layer or a plurality of layers.

Further, when each of the first protective layer 114 and the second protective layer 116 is configured as a plurality of layers, each layer may be made of the same material or different materials.

In the present specification, for ease of understanding, the protective layer may be described separately as the first protective layer 114 and the second protective layer 116. However, the present specification is not limited thereto.

The first protective layer 114 may be positioned on the first bending slope 110b and the second bending slope 120b of the first accommodating portion EH1 formed in the first pattern area EA1 of the first glass substrate 110 and the first sub-glass substrate 120 so as to overlap the first bending slope 110b and the second bending slope 120b. The second protective layer 116 may be positioned on the first bezel slope 110c and the second bezel slope 120c of the second accommodating portion EH2 formed in the second pattern area EA2 so as to overlap the first bezel slope 110c and the second bezel slope 120c.

Specifically, the first protective layer 114 may be positioned on the first glass substrate 110 and the first sub-glass substrate 120 overlapping the bending area BA of the non-display area NDA. The second protective layer 116 may be positioned on the first pattern area EA1 of the first glass substrate 110 overlapping the bezel area BZ of the non-display area NDA.

In addition, the second protective layer 116 may also be positioned on the second pattern area EA2 of the driving circuit area DCA of the first sub-glass substrate 120.

The first protective layer 114 may have a size larger than the first pattern area EA1 overlapping the first bending slope 110b and the second bending slope 120b of the first glass substrate 110 and the first sub-glass substrate 120, or may have a size larger than the bending area BA. The second protective layer 116 may have a size larger than the second pattern area EA2 overlapping the first bezel slope 110c of the first glass substrate 110.

In addition, the second protective layer 116 may have a size larger than the second pattern area EA2 overlapping the second bezel slope 120c of the first sub-glass substrate 120.

Specifically, the first protective layer 114 and the second protective layer 116 may prevent the display device from being damaged by an etchant used in a glass etching process for forming the first bending slope 110b of the first glass substrate 110 and the second bending slope 120b of the first sub-glass substrate 120, which constitute the first accommodating portion EH1, or in a glass etching process for forming the first bezel slope 110c of the first glass substrate 110 overlapping the bezel area BZ and the second bezel slope 120c of the first sub-glass substrate 120, which constitute the second accommodating portion EH2. The first protective layer 114 and the second protective layer 116 may be made of a material having corrosion resistance (or tolerance) to a hydrofluoric acid (HF) etchant used in the glass etching process.

The first protective layer 114 and the second protective layer 116 may be defined as an etch stop pattern, an etch barrier pattern, or an etch mask pattern.

In forming the first accommodating portion EH1 including the first bending slope 110b of the first glass substrate 110 and the second bending slope 120b of the first sub-glass substrate 120, the first protective layer 114 may be formed to overlap regions extending to one side and the other side of the bending area BA, in consideration of a process margin by etching.

Specifically, the first protective layer 114 may be formed to overlap the first flat surface 110a of the first glass substrate 110 and the second flat surface 120a of the first sub-glass substrate 120 by a predetermined area. When the first protective layer 114 is formed to extend to one side and the other side of the bending area BA, stability of the etching process for forming the first accommodating portion EH1 including the first bending slope 110b and the second bending slope 120b of the first glass substrate 110 and the first sub-glass substrate 120 may be improved.

The second protective layer 116 may be formed to overlap a region extending to one side, e.g., in a direction toward the display area DA, of the bezel area BZ of the non-display area NDA of the first glass substrate 110. The second protective layer 116 may also be formed to overlap a region extending to the other side, e.g., in a direction toward the driving circuit area DCA, of the first sub-glass substrate 120.

A module BLU including a light source may be positioned on the rear surface of the first glass substrate 110 located in the display area DA. The light source (not shown) may be a two-dimensional micro-LED (µ-LED), and a backlight unit or the like may be applied to the module. However, the present specification is not limited thereto.

As shown in FIG. 9, the display device 10 is bent in the bending area BA so that the second rear surface 120d of the first sub-glass substrate 120 may face the first rear surface 110d of the first glass substrate 110.

In addition, even when the display device 10 is bent in the bending area BA, the first rear surface 110d of the first glass substrate 110 and the second rear surface 120d of the first sub-glass substrate 120 may not face each other.

The polarizing film 150 may be positioned on the first rear surface 110d of the first glass substrate 110. A backlight unit 300 may be positioned on the rear surface of the polarizing film 150.

An adhesive member (not shown) for fixing the first sub-glass substrate 120 to the first glass substrate 110 may further be included in a contact portion between the first rear surface 110d of the first glass substrate 110 and the second rear surface 120d of the first sub-glass substrate 120. The adhesive member (not shown) may be an optically clear adhesive (OCA), an optically clear resin (OCR), a pressure sensitive adhesive (PSA), a double-sided adhesive, or a double-sided tape, but is not limited thereto.

Referring to FIGS. 3 to 6, a third pattern area EA3 may be defined in the rear surface of the non-display area NDA of the second glass substrate 210, which is positioned to vertically face the first glass substrate 110.

Specifically, the third pattern area EA3 may overlap the bezel area BZ of the non-display area NDA surrounding the display area DA of the second glass substrate 210. The third accommodating portion EH3 may be formed in the third pattern area EA3. The third accommodating portion EH3 may include a third bezel slope 210c formed to extend inward toward the display area DA of the second glass substrate 210. The third width W3 of the third accommodating portion EH3 may be equal to or smaller than the first width W1 of the first accommodating portion EH1 overlapping the bending area BA. However, the present specification is not limited thereto.

Here, one side of the third accommodating portion EH3 may be formed in an outward direction with respect to the display area DA of the second glass substrate 210, but may be removed during a cutting process of the third accommodating portion EH3 for cell separation. Accordingly, after cutting of the third accommodating portion EH3 for cell separation, only the third bezel slope 210c of the third accommodating portion EH3 may remain.

Here, the fact that the third bezel slope 210c of the third accommodating portion EH3 formed in the third pattern area EA3 overlaps the bezel area BZ of the non-display area NDA may mean that the third bezel slope 210c may overlap a black matrix 220 overlapping the bezel area BZ.

The third bezel slope 210c of the third accommodating portion EH3 is illustrated as having an inclined cross-section of a straight line shape, but the embodiment of the present specification is not limited thereto.

The third bezel slope 210c of the second glass substrate 210 may be referred to as having a reverse taper shape or an undercut structure, as shown in FIG. 3. However, the present specification is not limited thereto.

In addition, the black matrix 220 may be positioned on a third flat surface 210a of the second glass substrate 210 that overlaps the third pattern area EA3 located in the bezel area BZ of the non-display area NDA. The black matrix 220 may also be positioned at regular intervals on the third flat surface 210a of the second glass substrate 210 that is positioned to correspond to the first glass substrate 110 of the display area DA with a certain cell gap therebetween.

The black matrix 220 may have a closed loop shape surrounding the display area DA in order to block light leakage. The black matrix 220 may also be positioned in a region corresponding to a data line (not shown) and a gate line (not shown) of the thin film transistor 130 of the first glass substrate 110 to block light leakage. In addition, the black matrix 220 may be positioned between the color filter layers 230 to prevent color mixing between the color filter layers 230.

The black matrix 220 may have chemical resistance to hydrofluoric acid (HF) etchant and thus may serve as a protective layer (an etch stopper) to prevent etching during etching of the second glass substrate 210 for forming the third accommodating portion EH3.

The black matrix 220 may be positioned to extend to the bezel area BZ of the non-display area NDA of the second glass substrate 210 so as to overlap the bezel area BZ of the non-display area NDA of the display device.

In addition, the display device 10 according to one embodiment of the present specification may perform scribing or grinding to form the first to third accommodating portions EH1, EH2, and EH3 on the first and second glass substrates 110 and 210 and the first sub-glass substrate 120. However, when chemical etching is performed, the rigidity of the ends of the first glass substrate 110 and the second glass substrate 210 may be improved.

Referring to FIGS. 2 to 4, the display device 10 may include the first glass substrate 110, which includes the display area DA and the non-display area NDA having the bending area BA; the second glass substrate 210 positioned above the first glass substrate 110 of the display area DA so as to face it with a certain cell gap therebetween; the liquid crystal layer 250 positioned between the first and second glass substrates 110 and 210; the first sub-glass substrate 120 positioned to be bent below the first glass substrate 110 with the bending area BA interposed therebetween; and a module positioned below the first glass substrate 110 and the first sub-glass substrate 120 and including a light source (not shown).

In addition, the first polarizing film 150 and the second polarizing film 260 may be positioned on the first rear surface 110d of the first glass substrate 110 and the third rear surface 210d of the second glass substrate 210, respectively.

Specifically, on the first flat surface 110a of the first glass substrate 110 of the display area DA constituting the display device 10 according to one embodiment of the present specification, the thin film transistor (TFT) 130 including a semiconductor layer 102, a gate insulating film 103, a gate electrode 104, an interlayer insulating film 105, a source electrode 107, and a drain electrode 108 may be formed.

A planarization layer 132 may be formed on the entire surface of the first glass substrate 110 including the thin film transistor 130, and the pixel electrode 134 electrically connected to the thin film transistor 130 through a drain contact hole 109 may be formed on the planarization layer 132.

A first alignment film 136 for facilitating alignment of liquid crystals may be formed on the pixel electrode 134.

The black matrix 220 may be formed at regular intervals on the third flat surface 210a of the second glass substrate 210 that is positioned to correspond to the first glass substrate 110 of the display area DA with a certain cell gap therebetween.

The color filter layers 230 of red (R), green (G), and blue (B) for filtering only light in specific wavelength bands may be provided between portions of the black matrix 220.

In addition, an overcoat layer (not shown) may be further formed on the black matrix 220 and the color filter layer 230. The overcoat layer (not shown) may be provided to protect the color filter layer 230, planarize the surface, and improve adhesion to a common electrode 240, and may be formed of an acrylic-based resin.

The common electrode 240 may be provided on the overcoat layer (not shown). The common electrode 240 may be formed of a transparent conductive material. For example, the common electrode 240 may be made of indium tin oxide (ITO) or indium zinc oxide (IZO).

A second alignment film 242 may be formed on the common electrode 240 to facilitate alignment of liquid crystals.

Although not shown in the drawings, a spacer (not shown) for maintaining a certain cell gap may additionally be formed between the first glass substrate 110 and the second glass substrate 210.

In the non-display area NDA of the first glass substrate 110 and the second glass substrate 210, a seal line 280 may be positioned, and the first and second glass substrates 110 and 210 may be bonded together by the seal line 280.

The liquid crystal layer 250 may be provided in a region where a certain cell gap is formed between the first glass substrate 110 and the second glass substrate 210.

The non-display area NDA of the first glass substrate 110 and the first sub-glass substrate 120 may include the bending area BA and the driving circuit area DCA. The bending area BA may be provided in the first glass substrate 110 and the first sub-glass substrate 120. A plurality of link lines 125, which form unit blocks at regular intervals, may be arranged in the bending area BA.

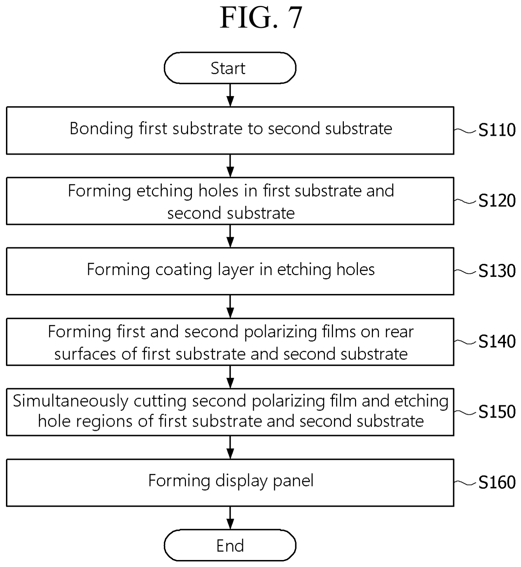

The driving circuit area DCA may be located in the first sub-glass substrate 120. The driving circuit area DCA may include driving circuits (not shown) connected to the plurality of link lines 125 and a plurality of flexible printed circuits (FPC) 162 connected to the driving circuits. As shown in FIG. 7, the plurality of link lines 125 may be connected to the external printed circuit board (PCB) 164 through the plurality of FPCs 162, which are flexible films.

The PCB 164 may include a plurality of elements such as integrated circuits provided on the first glass substrate 110 and may generate various control signals, data signals, and the like for driving the display device 10.

The bending area BA of the non-display area NDA of the first glass substrate 110 and the first sub-glass substrate 120 may be positioned to overlap the link lines 125. The first accommodating portion EH1 may be formed in the first pattern area EA1 of the first sub-glass substrate 120 located to overlap the bending area BA. The first accommodating portion EH1 may include the first bending slope 110b and the second bending slope 120b.

The first protective layer 114 may be positioned at least on the bending area BA and the driving circuit area DCA that overlap the first bending slope 110b and the second bending slope 120b. The plurality of link lines 125 may be positioned on the first protective layer 114. In addition, a portion of the planarization layer 132 formed on the display area DA may extend and be positioned on the plurality of link lines 125.

The first coating layer 172 may be positioned between the first protective layer 114 and the first bending slope 110b and the second bending slope 120b constituting the first accommodating portion EH1 provided in the bending area BA of the first glass substrate 110 and the first sub-glass substrate 120. Since tensile force may act on the link line 125 located on the first protective layer 114 during bending of the first glass substrate 110 and the first sub-glass substrate 120, resulting in the occurrence of cracks, the first coating layer 172 may be arranged in the first accommodating portion EH1 to prevent cracks from occurring in the link line 125. The first coating layer 172 may be formed of an acrylic-based material such as an acrylate polymer. However, the present specification is not limited thereto.

In addition, a second coating layer 174 may be positioned between the first bezel slope 110c and the second bezel slope 120c, which constitute the second accommodating portion EH2 provided below the bezel area BZ of the first glass substrate 110 and the first sub-glass substrate 120 overlapping the second protective layer 116.

A third coating layer 290 may be positioned on the third bezel slope 210c, which constitutes the third accommodating portion EH3 overlapping the bezel area BZ of the second glass substrate 210. A dummy seal pattern 292 may be positioned on the third coating layer 290. However, the present specification is not limited thereto.

Further, the first polarizing film 150 may be positioned on the first rear surface 110d of the first glass substrate 110, and the second polarizing film 260 may be positioned on the third rear surface 210d of the second glass substrate 210. The first polarizing film 150 may be positioned to overlap the display area DA. The second polarizing film 260 may be positioned over both the display area DA and the non-display area NDA. One end of the second polarizing film 260 may be positioned to overlap a portion of the third accommodating portion EH3.

FIG. 7 is a flowchart illustrating a manufacturing process of a display device according to one embodiment of the present specification.

The display device of the present specification may be implemented as a liquid crystal display device (LCD), a plasma display panel device (PDP), a field emission display device (FED), an electroluminescence display device (ELD), or an organic light emitting diode (OLED), but in the present specification, a liquid crystal display device that uses a backlight unit employing a mini LED or a micro LED as a light source may be described as an example. However, the present specification is not limited thereto.

Referring to FIG. 7, in the manufacturing process of the display device of the present specification, in a first step S110, the first glass substrate and the second glass substrate on which components forming the cell are arranged may be bonded together facing each other vertically.

In a second step S120, a plurality of etching holes may be formed on the first rear surface of the first glass substrate, the second rear surface of the first sub-glass substrate, and the third rear surface of the second glass substrate.

In a third step S130, the coating layer may be arranged in the plurality of etching holes.

In a fourth step S140, the first and second polarizing films may be arranged on the rear surfaces of the first glass substrate and the second glass substrate.

In a fifth step S150, the regions of the first and second accommodating portions of the first glass substrate and the first sub-glass substrate, the region of the third accommodating portion of the second glass substrate, and the first and second polarizing films may be cut to separate unit display panel cells from a mother substrate.

In a sixth step S160, a display panel may be formed by bending the first sub-glass substrate provided on the other side of the bending area of the separated unit display panel cell toward the rear surface of the first glass substrate so that the first sub-glass substrate is positioned to face the rear surface of the first glass substrate.

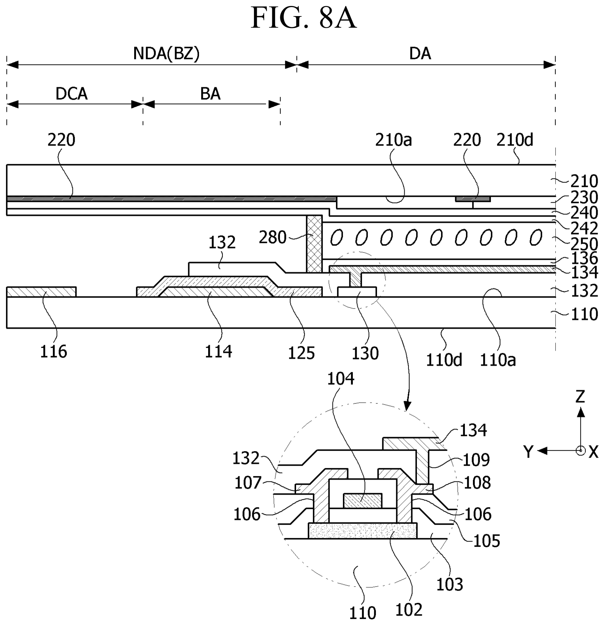

The manufacturing process according to one embodiment of the present specification will be described below with reference to FIGS. 8A to 8F.

FIGS. 8A to 8F are cross-sectional views illustrating a manufacturing process of a display device according to one embodiment of the present specification.

The first glass substrate 110, the second glass substrate 210, and the first sub-glass substrate 120 may include a glass material. The first glass substrate 110 and the first sub-glass substrate 120 may have a thickness ranging from 0.01 mm to 1.0 mm in order to maintain the flatness of the first flat surface 110a and the second flat surface 120a, or to prevent moisture or oxygen from penetrating into the display device 10. However, the thickness of the first glass substrate 110 and the first sub-glass substrate 120 is not limited thereto and may vary depending on the design conditions of the display device 10.

The display area DA is an area in which an image is displayed and may include a plurality of pixels. The display area DA may be supported by the first flat surface 110a of the first glass substrate 110. Here, the plurality of pixels may be arranged in a matrix form, and each of the plurality of pixels may include sub-pixels.

The thin film transistor 130 may be formed on the first glass substrate 110, which is a thin film transistor array substrate. For simplicity of description, the first glass substrate 110 may include a mother substrate.

The first glass substrate 110 may include the display area DA and the non-display area NDA surrounding the display area DA. The non-display area NDA may include the driving circuit area DCA, the bending area BA, and the bezel area BZ. The bending area BA may be located in the non-display area NDA between the driving circuit area DCA and the display area DA.

The non-display area NDA may include the bezel area BZ surrounding the display area DA.

The bending area BA may be defined as an area provided to allow a portion of the display device 10 to be bent. Accordingly, the display device 10 may be folded with a certain radius of curvature when the bending area BA is bent.

The display device 10 may have areas defined as the flat area FA, the bending area BA, and the rear flat area RFA (see FIG. 9). Since the bending area BA is the same as previously described, a detailed description thereof will be omitted.

The flat area FA may be defined as an area overlapping the first flat surface 110a of the first glass substrate 110. In addition, the flat area FA may overlap the display area DA and may include a predetermined portion of the non-display area NDA surrounding the display area DA.

The rear flat area RFA may be defined as an area overlapping the second flat surface 120a of the first sub-glass substrate 120 and not overlapping the bending area BA. The rear flat area RFA may be provided with the flexible printed circuits (FPC)162 (see FIG. 9) and the PCB 164 (see FIG. 9). However, the present specification is not limited thereto.

Referring to FIG. 8A, first, amorphous silicon is deposited on the first glass substrate 110, and a photoresist is applied thereon, and then exposure is performed through a mask. The exposed photoresist may be developed and patterning may be performed through a mask process in which the amorphous silicon layer exposed to the outside of the photoresist remaining after the development is etched, thereby forming the semiconductor layer 102.

In this case, the process may further include dehydrating the semiconductor layer 102 and crystallizing it into polysilicon by heat treatment.

Next, an insulating material such as silicon nitride (SiNx) or silicon oxide (SiO₂) may be deposited on the first glass substrate 110 on which the semiconductor layer 102 is formed, thereby forming the gate insulating film 103 on the first glass substrate 110.

Subsequently, an organic material for forming a protective layer may be deposited on the non-display area NDA of the first glass substrate 110, and then selectively patterned, so that the first protective layer 114 and the second protective layer 116 are respectively arranged at positions overlapping the bending area BA and the bezel area BZ of the non-display area NDA of the first glass substrate 110.

In this case, the first protective layer 114 and the second protective layer 116 may be formed by spraying a material onto set positions in a mechanical manner using methods such as a slit coater, inkjet, or dispenser, or may be formed by a patterning process through a mask process using photolithography techniques. However, the present specification is not limited thereto.

Next, a first metal layer (not shown) may be deposited on the gate insulating film 103, and a mask process may be performed to form the gate electrode 104 on the semiconductor layer 102, a gate pad (not shown) connected to one end of a gate line (not shown), and the link line 125. However, the present specification is not limited thereto.

In this case, the first metal layer may be formed as a single layer or a multilayer structure including two or more layers by depositing one or more materials selected from aluminum (Al), copper (Cu), gold (Au), silver (Ag), titanium (Ti), chromium (Cr), tungsten (W), tantalum (Ta), and molybdenum (Mo). Alternatively, the first metal layer may be formed of an alloy including one or more of calcium (Ca), magnesium (Mg), zinc (Zn), titanium (Ti), molybdenum (Mo), nickel (Ni), manganese (Mn), zirconium (Zr), cadmium (Cd), gold (Au), silver (Ag), cobalt (Co), indium (In), tantalum (Ta), hafnium (Hf), tungsten (W), and chromium (Cr), and any one of aluminum (Al), copper (Cu), gold (Au), silver (Ag), titanium (Ti), chromium (Cr), tungsten (W), tantalum (Ta), and molybdenum (Mo). The link line 125 may be positioned in the bending area BA and the driving circuit area DCA of the non-display area NDA.

The link line 125 may be any one of a data link line or a gate link line, but is not limited thereto. In one example, the link line 125 may be formed of a material having excellent flexibility and conductivity in order to reduce the occurrence of cracks during bending of the bending area BA. For example, the link line 125 may be formed of the same conductive material as and by the same process as the source electrode or the drain electrode of the thin film transistor 130 constituting a pixel array layer (not shown), but is not limited thereto and may be formed of a different material.

The non-display area NDA of the first glass substrate 110 and the first sub-glass substrate 120 may include the bending area BA and the driving circuit area DCA. The bending area BA may be provided in the first glass substrate 110 and the first sub-glass substrate 120. The plurality of link lines 125 may be arranged in the bending area BA at regular intervals. In this case, the link line 125 may be arranged across the first protective layer 114 of the bending area BA and the second protective layer 116 in the non-display area NDA in the outer area of the driving circuit area DCA.

The driving circuit area DCA may be located in the first sub-glass substrate 120. The plurality of driving circuits (not shown) connected to the plurality of link lines 125, and the plurality of flexible printed circuits (FPC) 162 connected to the driving circuits may be arranged in the driving circuit area DCA. As shown in FIG. 9, the plurality of link lines 125 may be connected to the external printed circuit board (PCB) 164 through the plurality of FPCs 162, which are flexible films.

The PCB 164 may include a plurality of elements, such as integrated circuits formed on the first glass substrate 110, and may generate various control signals and data signals for driving the display device 10.

Subsequently, the gate insulating film 103 exposed outside the gate electrode 104 and the gate line (not shown) may be etched, and n+ or p+ doping may be performed by ion implantation with an appropriate dose on the first glass substrate 110. In this case, in the semiconductor layer 102, a region where the ion implantation is blocked by the gate electrode 104 may form a first region (not shown), and the other ion-implanted regions may form second regions (not shown), thereby forming the semiconductor layer 102 including the first region and the second regions.

Next, an inorganic insulating material, e.g., silicon oxide (SiO₂) or silicon nitride (SiNx), may be deposited over the entire surface of the first glass substrate 110 on which the gate electrode 104 is formed, and a patterning process using a mask may be performed to form the interlayer insulating film 105 having semiconductor layer contact holes 106 that respectively expose the second regions (not shown) on both sides of the gate electrode 104.

Subsequently, a second metal layer may be deposited over the entire surface of the first glass substrate 110 on which the interlayer insulating film 105 is formed, and a patterning process using a mask may be performed to form the source and drain electrodes 107 and 108 that are in contact with the semiconductor layer 102 through the semiconductor layer contact holes 106. In this case, the source and drain electrodes 107 and 108 may be spaced apart from each other with the gate electrode 104 interposed therebetween.

In addition, a data line (not shown) defining pixel areas by crossing the gate line (not shown), and a power line (not shown) spaced apart from the data line may be formed, and a data pad (not shown) connected to one end of the data line may be formed in the non-display area NDA.

The second metal layer may be formed as a single layer or a multilayer structure including two or more layers by depositing one or more materials selected from aluminum (Al), copper (Cu), gold (Au), silver (Ag), titanium (Ti), chromium (Cr), tungsten (W), tantalum (Ta), and molybdenum (Mo). Alternatively, the second metal layer may be formed of an alloy containing one or more of calcium (Ca), magnesium (Mg), zinc (Zn), titanium (Ti), molybdenum (Mo), nickel (Ni), manganese (Mn), zirconium (Zr), cadmium (Cd), gold (Au), silver (Ag), cobalt (Co), indium (In), tantalum (Ta), hafnium (Hf), tungsten (W), and chromium (Cr), and any one of aluminum (Al), copper (Cu), gold (Au), silver (Ag), titanium (Ti), chromium (Cr), tungsten (W), tantalum (Ta), and molybdenum (Mo).

Next, an inorganic insulating material such as silicon nitride (SiNx) or silicon oxide (SiO₂) may be deposited, or an organic insulating material such as photoacrylic or benzocyclobutene (BCB) may be coated, over the entire surface of the first glass substrate 110 on which the source and drain electrodes 107 and 108 constituting the thin film transistor 130 are formed, thereby forming a protective layer, e.g., the planarization layer 132. In this case, the planarization layer 132 may also be arranged on the first glass substrate 110 and on the bending area BA and the bezel area BZ of the non-display area NDA of the first sub-glass substrate 120, which is separated from the first glass substrate 110.

Subsequently, a mask process may be performed to form the drain contact hole 109 that exposes the drain electrode 108 in the planarization layer 132.

Next, indium tin oxide (ITO) or indium zinc oxide (IZO), which is a transparent conductive material having a relatively high work function, may be deposited to have a thickness of several thousand angstroms (Å) on the planarization layer 132 and may be patterned to form the pixel electrode 134 that is in contact with the drain electrode 108 of the thin film transistor 130 through the drain contact hole 109 in each pixel area.

Next, the first alignment film 136 for facilitating alignment of the liquid crystals may be formed on the pixel electrode 134.

Subsequently, the black matrix 220 may be formed at regular intervals on the third flat surface 210a of the second glass substrate 210 that is positioned to vertically face the first glass substrate 110 of the display area DA with a certain cell gap therebetween.

Then, red (R), green (G), and blue (B) color filter layers 230 that filter only light in specific wavelength bands may be formed between portions of the black matrix 220. The color filter layers 230 may include an acrylic resin and a pigment. The color filter layers 230 may be classified into red (R), green (G), and blue (B) depending on the types of pigments used to implement the colors.

Next, an overcoat layer (not shown) may further be formed on the black matrix 220 and the color filter layers 230.

Subsequently, the common electrode 240 may be formed on the overcoat layer (not shown).

Next, the second alignment film 242 may be formed on the common electrode 240 to facilitate alignment of the liquid crystals.

Although not shown in the drawings, a spacer (not shown), which serves to maintain a certain cell gap between the first glass substrate 110 and the second glass substrate 210, may be additionally formed.

Next, the seal line 280, which may be made of thermosetting epoxy resin, may be provided in the non-display area NDA of the first and second glass substrates 110 and 210, so that the first and second glass substrates 110 and 210 may be bonded together through the seal line 280.

Subsequently, the liquid crystal layer 250 may be formed in a region where a certain cell gap is formed between the first glass substrate 110 and the second glass substrate 210.

By thus forming the liquid crystal layer 250 between the first and second glass substrates 110 and 210, display panel cells of the display device 10 may be fabricated.

Thereafter, an etching process for separating the plurality of display panel cells from the mother substrate may be performed as described below.

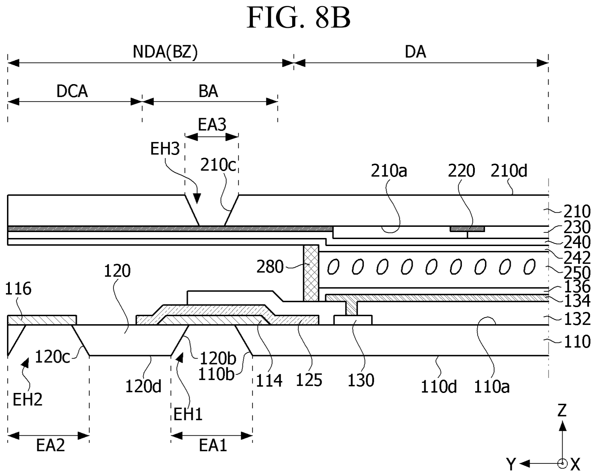

Referring to FIG. 8B, first, in order to perform an etching process, the first pattern area EA1, the second pattern area EA2, and the third pattern area EA3 may be preset in the bending area BA of the first glass substrate 110, the bezel area BZ of the first glass substrate 110, and the bezel area BZ of the second glass substrate 210, respectively.

In this case, the third pattern area EA3 may be an area overlapping the bezel area BZ and the bending area BA of the first glass substrate 110.

Next, a glass etching mask pattern (not shown) may be formed on the rear surface of the first glass substrate 110 excluding the preset first to third pattern areas EA1, EA2, and EA3. Here, the glass etching mask pattern may include etching hole regions corresponding to the bezel area BZ and the bending area BA of the display device 10. The etching hole regions may include, as will be described later, the first accommodating portion EH1 provided in the bending area BA between the first glass substrate 110 and the first sub-glass substrate 120 separated from the first glass substrate 110 during the etching process of the first glass substrate 110, a second accommodating portion EH2 provided in the bezel area BZ separated from the first sub-glass substrate 120 during the etching process of the first glass substrate 110, and a third accommodating portion EH3 provided in the bezel area BZ of the second glass substrate 210 during the etching process of the second glass substrate 210.

Next, referring to FIG. 8B, portions, e.g., the rear surfaces of the first and second glass substrates, overlapping the etching hole regions may be etched and removed through a glass etching process using the glass etching mask pattern as a mask, thereby forming the first accommodating portion EH1 that separates the first sub-glass substrate 120 supporting the non-display area NDA including the driving circuit area DCA from the first glass substrate 110 supporting the display area DA, the second accommodating portion EH2 overlapping the bezel area BZ of the first glass substrate 110, and the third accommodating portion EH3 overlapping the bezel area BZ of the second glass substrate 210.

In this case, the glass etching process may be performed as a wet etching process rather than a dry etching process. However, the present specification is not limited thereto.

The first accommodating portion EH1 may include the first bending slope 110b provided on one side of the rear surface of the first glass substrate 110 overlapping the bending area BA, and the second bending slope 120b facing the first bending slope 110b and provided on one side of the rear surface of the first sub-glass substrate 120 separated from the first glass substrate 110.

The second accommodating portion EH2 may include the first bezel slope 110c provided on one side of the rear surface of the first glass substrate 110 overlapping the bezel area BZ of the non-display area NDA, and the second bezel slope 120c provided on the other side of the rear surface of the first sub-glass substrate 120.

The third accommodating portion EH3 may include the third bezel slope 210c provided on one side of the rear surface of the second glass substrate 210 overlapping the bezel area BZ of the non-display area NDA surrounding the display area DA.

According to one embodiment of the present specification, the first bending slope 110b and the first bezel slope 110c of the first glass substrate 110, the second bending slope 120b and the second bezel slope 120c of the first sub-glass substrate 120, and the third bezel slope 210c of the second glass substrate 210 may be formed by a glass etching process under soft etching conditions. Here, the soft etching may be defined as a glass etching process performed for a period of time less than a reference etching time set to etch a glass substrate having a predetermined thickness. However, the present specification is not limited thereto.

For example, the first bending slope 110b and the first bezel slope 110c of the first glass substrate 110, the second bending slope 120b and the second bezel slope 120c of the first sub-glass substrate 120, and the third bezel slope 210c of the second glass substrate 210 may be formed by forming a mask pattern on the rear surface of a first mother substrate 1000 (see FIG. 4) of the display area DA and the non-display area NDA excluding the bending area BA and the bezel area BZ. Thereafter, the rear surface regions of the first and second glass substrates 110 and 210 and the first sub-glass substrate 120 overlapping the bending area BA and the bezel area BZ may be etched in an inclined shape through a glass etching process using the mask pattern as a mask based on the soft etching conditions.

In this case, the first mother substrate 1000 may refer to a glass substrate before the first glass substrate 110 and the first sub-glass substrate 120 are separated by the glass etching process.

Here, the fact that the first bending slope 110b and the second bending slope 120b of the first accommodating portion EH1 formed in the first pattern area EA1 overlap the bending area BA may mean that the first bending slope 110b and the second bending slope 120b face the rear surface of the first protective layer 114 overlapping the bending area BA. In addition, since the display device has a structure that cannot be bent when the first bending slope 110b and the second bending slope 120b are not provided, the bending area BA of the display device may be defined as overlapping the first bending slope 110b and the second bending slope 120b, which constitute the first accommodating portion EH1.

The first glass substrate 110 may include the first flat surface 110a, the first bending slope 110b disposed on one side of the first flat surface 110a, and the first bezel slope 110c, and may further include the first rear surface 110d facing the first flat surface 110a.

The first end E1, which is a boundary between the first flat surface 110a and the first bending slope 110b, and the second end E2, which is a boundary between the first bending slope 110b and the first rear surface 110d, may be defined in the first glass substrate 110.

The inclination of the first bending slope 110b may be defined by an inclined surface that connects the first end E1 to the second end E2. Referring to FIGS. 2 and 3, the first bending slope 110b is illustrated as having a cross-section of a straight line shape, but the embodiment of the present specification is not limited thereto.

Here, the fact that the first bezel slope 110c and the second bezel slope 120c of the second accommodating portion EH2 formed in the second pattern area EA2 overlap the bezel area BZ may mean that the first bezel slope 110c and the second bezel slope 120c face the rear surface of the second protective layer 116 overlapping the bezel area BZ. In addition, since the display device has a structure that cannot be cut to separate cells when the first bezel slope 110c and the second bezel slope 120c are not provided, the bezel area BZ of the display device may be defined as overlapping the first bezel slope 110c and the second bezel slope 120c, which constitute the second accommodating portion EH2.

The first sub-glass substrate 120 may include the second flat surface 120a, the second bending slope 120b located on one side of the second flat surface 120a, and the second bezel slope 120c, and may further include the second rear surface 120d facing the second flat surface 120a.

The third end E3, which is a boundary between the second flat surface 120a and the second bending slope 120b, and the fourth end E4, which is a boundary between the second bending slope 120b and the second rear surface 120d, may be defined in the first sub-glass substrate 120.

The inclination of the second bending slope 120b may be defined by an inclined surface that connects the third end E3 to the fourth end E4. Referring to FIGS. 2 and 3, the second bending slope 120b is illustrated as having a cross-section of a straight line shape, but the embodiment of the present specification is not limited thereto.

The first bending slope 110b of the first glass substrate 110 and the second bending slope 120b of the first sub-glass substrate 120 may be referred to as having a reverse taper shape or an undercut structure, as shown in FIG. 3.

The first protective layer 114 may be positioned on the bending area BA of the first glass substrate 110 and the first sub-glass substrate 120 overlapping the first accommodating portion EH1, and the second protective layer 116 may be positioned on the bezel area BZ of the first glass substrate 110 and the first sub-glass substrate 120 overlapping the second accommodating portion EH2.

Further, the link line 125 may be arranged on the first protective layer 114 and the second protective layer 116 positioned in the bending area BA, the driving circuit area DCA, and the bezel area BZ of the non-display area NDA of the first glass substrate 110 and the first sub-glass substrate 120.

In addition, the black matrix 220 may be positioned on the bezel area BZ of the second glass substrate 210 overlapping the third accommodating portion EH3.

Specifically, the first protective layer 114 may be positioned on the first glass substrate 110 and the first sub-glass substrate 120 in a region overlapping the first bending slope 110b and the second bending slope 120b, which are formed during etching of portions of the first glass substrate 110 and the first sub-glass substrate 120 corresponding to the bending area BA.

Further, the second protective layer 116 may be positioned on the non-display area NDA surrounding the driving circuit area DCA of the first sub-glass substrate 120 and on the bezel area BZ of the non-display area NDA surrounding the display area DA of the first glass substrate 110, in a region overlapping the first bezel slope 110c and the second bezel slope 120c, which are formed during etching of portions of the first glass substrate 110 and the first sub-glass substrate 120 corresponding to the bezel area BZ of the non-display area NDA.

In this case, the first protective layer 114 may be configured to prevent damage caused by etching of the display device corresponding to the first bending slope 110b of the first glass substrate 110 and the second bending slope 120b of the first sub-glass substrate 120. In addition, the second protective layer 116 may be configured to prevent damage caused by etching of the display device corresponding to the first bezel slope 110c of the first glass substrate 110 and the second bezel slope 120c of the first sub-glass substrate 120. Accordingly, the first protective layer 114 and the second protective layer 116 may be positioned to overlap the bending area BA and the bezel area BZ of the display device.

The first protective layer 114 and the second protective layer 116 may be positioned on the first glass substrate 110 and the first sub-glass substrate 120 overlapping the bending area BA and the bezel area BZ. For example, the first protective layer 114 may be positioned to overlap the first flat surface 110a of the first glass substrate 110 extending to one side of the bending area BA and the second flat surface 120a of the first sub-glass substrate 120 extending to the other side of the bending area BA.

The second protective layer 116 may be positioned to overlap the first flat surface 110a of the first glass substrate 110 extending to one side of the bezel area BZ of the non-display area NDA of the first glass substrate 110, and the second flat surface 120a of the first sub-glass substrate 120 extending to the other side of the bending area BA. However, the present specification is not limited thereto.

The first protective layer 114 may be positioned on the first bending slope 110b and the second bending slope 120b of the first accommodating portion EH1 formed in the first pattern area EA1 of the first glass substrate 110 and the first sub-glass substrate 120. In addition, the second protective layer 116 may be positioned on the first bezel slope 110c and the second bezel slope 120c of the second accommodating portion EH2 formed in the second pattern area EA2.

Specifically, the first protective layer 114 and the second protective layer 116 may prevent the display device from being damaged by an etchant used in a glass etching process for forming the first accommodating portion EH1, e.g., the first bending slope 110b of the first glass substrate 110 and the second bending slope 120b of the first sub-glass substrate 120, or in a glass etching process for forming the second accommodating portion EH2, e.g., the first bezel slope 110c of the first glass substrate 110 and the second bezel slope 120c of the first sub-glass substrate 120. The first protective layer 114 and the second protective layer 116 may be made of a material having corrosion resistance (or tolerance) against an etchant used in the glass etching process.

According to one embodiment of the present specification, the first protective layer 114 and the second protective layer 116 may be prepared by spraying a material onto set positions in a mechanical manner using methods such as a slit coater, inkjet, or dispenser, or may be prepared by a patterning process using a photolithography mask.

As such, the first protective layer 114 and the second protective layer 116 may prevent damage to the display device 10 caused by the glass etching process for forming the first bending slope 110b and the first bezel slope 110c of the first glass substrate 110, and the second bending slope 120b and the second bezel slope 120c of the first sub-glass substrate 120. The first protective layer 114 and the second protective layer 116 may be defined as an etch stop pattern, an etch barrier pattern, or an etch mask pattern.

Further, in the process of forming the first bending slope 110b of the first glass substrate 110 and the second bending slope 120b of the first sub-glass substrate 120, the first protective layer 114 may be formed to also overlap regions extending to one side and the other side of the bending area BA in consideration of the process margin due to etching.

The second protective layer 116 may be formed to also overlap a region extending to one side, e.g., toward the display area DA, of the bezel area BZ of the non-display area NDA of the first glass substrate 110. In addition, the second protective layer 116 may be formed to also overlap a region extending to the other side, e.g., a toward the driving circuit area DCA, of the first sub-glass substrate 120.

Specifically, the first protective layer 114 may be formed to overlap, by a predetermined area, the first flat surface 110a of the first glass substrate 110 and the second flat surface 120a of the first sub-glass substrate 120. When the first protective layer 114 is formed to extend to one side and the other side of the bending area BA, the stability of the etching process for forming the first bending slope 110b of the first glass substrate 110 and the second bending slope 120b of the first sub-glass substrate 120 may be improved.

The black matrix 220 may be positioned on the third flat surface 210a of the second glass substrate 210 that overlaps the third pattern area EA3 located in the bezel area BZ of the non-display area NDA. The black matrix 220 may be arranged at regular intervals on the third flat surface 210a of the second glass substrate 210 that is positioned to correspond to the first glass substrate 110 of the display area DA with a certain cell gap therebetween.

Accordingly, the black matrix 220 may be applied as a protective layer that prevents further etching during the etching of the second glass substrate 210.

The black matrix 220 may be configured to prevent damage caused by etching of the display device corresponding to the third bezel slope 210c of the second glass substrate 210.

Therefore, the black matrix 220 may be arranged to extend to the bezel area BZ of the non-display area NDA of the second glass substrate 210 so as to overlap the bezel area BZ of the non-display area NDA of the display device.

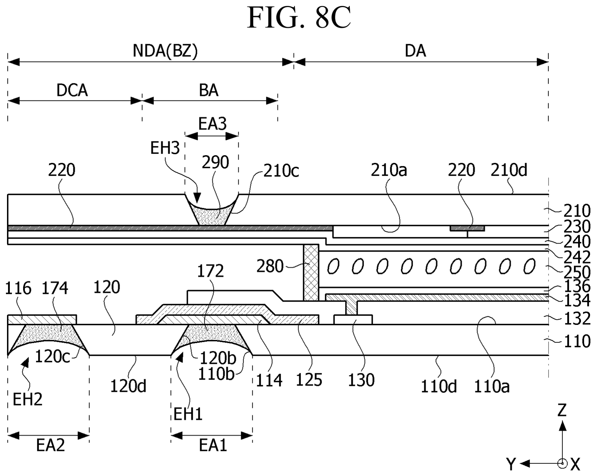

Next, referring to FIG. 8C, the first to third coating layers 172, 174, and 290 may be provided in the first accommodating portion EH1, the second accommodating portion EH2, and the third accommodating portion EH3, respectively.

Specifically, the first coating layer 172 may be positioned between the first bending slope 110b and the second bending slope 120b, which constitute the first accommodating portion EH1 provided below the bending area BA of the first glass substrate 110 and the first sub-glass substrate 120 overlapping the first protective layer 114.

In this case, since tensile force may act on the link line 125 located on the first protective layer 114 during bending of the first glass substrate 110 and the first sub-glass substrate 120, resulting in the occurrence of cracks, the first coating layer 172 may serve to protect the wiring by forming a resin with a small thickness at the bending location. The first coating layer 172 may be formed of an acrylic material such as an acrylate polymer. However, the present specification is not limited thereto.

In addition, the second coating layer 174 may be positioned between the first bezel slope 110c and the second bezel slope 120c, which constitute the second accommodating portion EH2 provided below the bezel area BZ of the first glass substrate 110 and the first sub-glass substrate 120 overlapping the second protective layer 116.

Further, the third coating layer 290 may be positioned on the third bezel slope 210c, which constitutes the third accommodating portion EH3 overlapping the bezel area BZ of the second glass substrate 210. In addition, in order to block moisture or the like from penetrating from the end of the second glass substrate 210 during a cutting process for separating cells, the dummy seal pattern 292 may be arranged on the third coating layer 290 in the third accommodating portion EH3 located in a cut region. However, the present specification is not limited thereto.

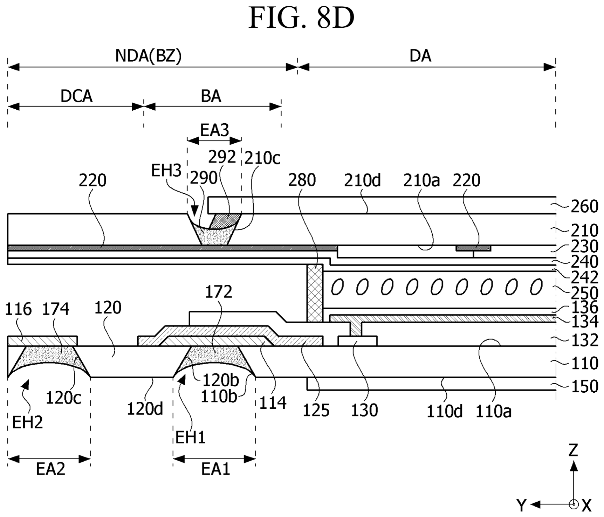

Next, referring to FIG. 8D, the first and second polarizing films 150 and 260 may be positioned on the first rear surface 110d of the first glass substrate 110 and the third rear surface 210d of the second glass substrate 210, respectively.

In this case, the first polarizing film 150 may be positioned to overlap the display area DA of the first glass substrate 110. The second polarizing film 260 may be positioned to extend not only over the display area DA of the second glass substrate 210, but also to a location above the third accommodating portion EH3 of the non-display area NDA. However, the present specification is not limited thereto.

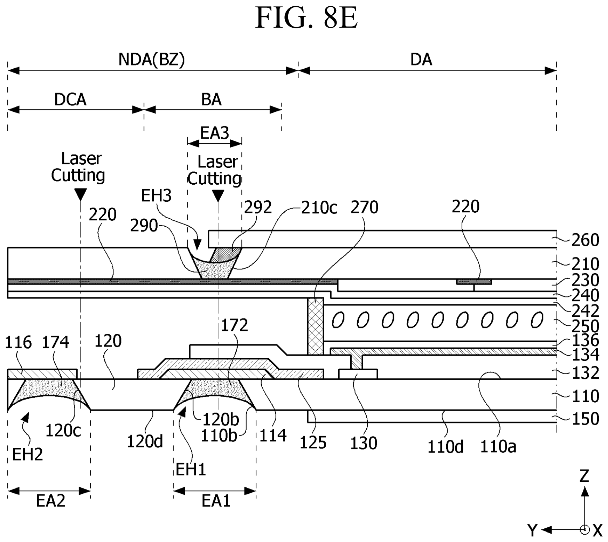

Next, referring to FIG. 8E, a laser cutting process may be performed to simultaneously cut the first to third accommodating portions EH1, EH2, and EH3, thereby forming unit display panel cells. In this case, during the laser cutting, the bezel area BZ of the second glass substrate 210 that overlap the bending area BA and the bezel area BZ of the first glass substrate 110, as well as a portion spaced outward from the bezel area BZ, may be cut.

In addition, during the laser cutting, the second polarizing film 260, the dummy seal pattern 292, the third coating layer 290, and the black matrix 220 located within the third accommodating portion EH3 of the second glass substrate 210 may be partially removed. Furthermore, as the non-display area NDA of the second glass substrate 210 that overlaps the bezel area BZ on the side of the driving circuit area DCA of the non-display area NDA of the first glass substrate 110 is cut during the laser cutting, the second glass substrate 210, the black matrix 220, the planarization layer 132 of the first glass substrate 110, the first protective layer 114, and the second coating layer 174 may be cut.

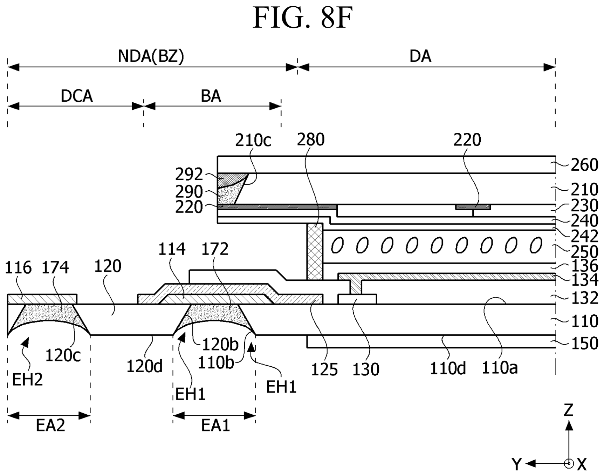

Next, referring to FIG. 8F, after the laser cutting process, each display panel cell may be separated from the first mother substrate 1000 (see FIG. 4) and a second mother substrate 2000 (see FIG. 4), which are bonded mother glass substrates, thereby completing the manufacturing of the display device according to one embodiment of the present specification.

In this case, after the laser cutting process, a portion of the second accommodating portion EH2, e.g., the second bezel slope 120c, the second coating layer 174, the second protective layer 116, the link line 125, and the planarization layer 132 may remain on the end side surface of the first glass substrate 110.

In addition, after the laser cutting process, a portion of the third accommodating portion EH3, e.g., the third bezel slope 210c, the third coating layer 290, the dummy seal pattern 292, the black matrix 220, and the second polarizing film 260 may remain on the end side surface of the second glass substrate 210.

According to the present specification, by performing chemical etching on the thin film transistor substrate and the color filter substrate in order to separate the cells using laser cutting, the rigidity of the ends of the first glass substrate and the second glass substrate may be improved.

In addition, according to the present specification, since the protective layer (etch stopper) may be damaged by foreign substances, water spray, vibration, or breaking during scribing and grinding for separating the cells, the scribing and grinding may be replaced with laser cutting to separate the cells, thereby preventing cracks in the protective layer and the wiring caused by foreign substances, vibration, water spray, or breaking.

FIG. 9 is a cross-sectional view illustrating a display device in a folded state according to one embodiment of the present specification.

Referring to FIG. 9, the display device according to one embodiment of the present specification may include a display panel cell separated from a mother glass substrate through a laser cutting process. The first sub-glass substrate 120, separated from the first glass substrate 110 of the display panel cell, may be arranged to face the rear surface of the first glass substrate 110 as the bending area BA between the first glass substrate 110 and the first sub-glass substrate 120 is bent. For example, the first sub-glass substrate 120 may be arranged in a vertical direction relative to the side surface of the first glass substrate 110 instead of facing the first glass substrate 110. However, the present specification is not limited thereto.

Further, the second rear surface 120d of the first sub-glass substrate 120 may be positioned on the first polarizing film 150. The second coating layer 174 in the second accommodating portion EH2 may be exposed to the outside at the side end of the first sub-glass substrate 120.

The backlight unit 300 may be positioned on the rear surface of the first polarizing film 150.

Due to the bending of the bending area BA, a dummy coating layer 176 may be applied on the planarization layer 132 exposed to the outside. The dummy coating layer 176 may be formed on the planarization layer 132 overlapping the first glass substrate 110, the first sub-glass substrate 120, the link line 125, the first protective layer 114, and the second protective layer 116 of the bending area BA and the rear flat area RFA.

Since tensile force may act on the link line 125 located on the first protective layer 114 during bending, resulting in the occurrence of cracks, the dummy coating layer 176 may serve to protect the wiring by forming a resin with a small thickness at the bending location. The dummy coating layer 176 may be formed of an acrylic material such as an acrylate polymer.

The dummy coating layer 176 may adjust the neutral plane of the bending area BA. The neutral plane may refer to an imaginary plane that does not receive stress due to the compressive force and the tensile force applied to the structure canceling each other when the structure is bent. When two or more structures are stacked, an imaginary neutral plane may be formed between the structures. When the entire structure is bent in one direction, the structures positioned on the bending direction side with respect to the neutral plane are compressed by the bending and thus subjected to compressive force. In contrast, the structures positioned on the side opposite to the bending direction with respect to the neutral plane are stretched by the bending and thus subjected to tensile force. Since the structures are more vulnerable to tensile force than to the same amount of compressive force, cracks are more likely to occur when the structures are subjected to tensile force.

The first protective layer 114 positioned below the neutral plane may be compressed and therefore subjected to compressive force, while the link line 125 disposed above the neutral plane may be subjected to tensile force, so that cracks may occur due to the tensile force. Accordingly, in order to minimize the tensile force applied to the wiring, the wiring may be positioned on the neutral plane.

Therefore, the dummy coating layer 176 may be positioned on the bending area BA to raise the neutral plane upward, and the neutral plane may be positioned at the same level as the wiring or at a higher level than the wiring, so that the wiring may not receive stress or may be subjected to compressive force during bending, thereby suppressing the occurrence of cracks.

The plurality of link lines 125 arranged in the driving circuit area DCA of the first sub-glass substrate 120 may be connected to the plurality of flexible printed circuits (FPCs) 162, and the plurality of link lines 125 may be connected to the external PCB 164 through the plurality of FPCs 162, which are flexible films.

By thus bending the bending area BA to allow the first sub-glass substrate 120 of the non-display area NDA to face the first rear surface 110d of the first glass substrate 110, the bezel width of the display device may be reduced, thereby enabling the implementation of a four-sided even bezel.

According to the present specification, by applying a protective layer to a portion below the link line of the glass substrate located in the bending area and to the bezel area, bezel bending may be implemented, and through the bezel bending, the bezel width may be reduced by an amount corresponding to the link line area and the driving circuit area.

The display device according to an embodiment of the present specification may include a mobile device, a video phone, a smart watch, a watch phone, a wearable apparatus, a foldable apparatus, a rollable apparatus, a bendable apparatus, a flexible apparatus, a curved apparatus, a sliding apparatus, a variable apparatus, an electronic notebook, an e-book, a portable multimedia player (PMP), a personal digital assistant (PDA), an MP3 player, a mobile medical device, a desktop PC, a laptop PC, a netbook computer, a workstation, a navigation, an in-vehicle display device, an in-theater display device, a television, a wallpaper device, a signage device, a gaming device, a laptop, a monitor, a camera, a camcorder, and a main board of a consumer electronics device.

The following numbered examples pertain to embodiments of the present disclosure.

Example 1: A display device comprising: a first glass substrate including a display area and a non-display area having a bezel area surrounding the display area and a bending area; a second glass substrate provided above the first glass substrate so as to overlap the first glass substrate with a certain gap therebetween; a first sub-glass substrate provided below the first glass substrate of the non-display area so as to overlap the first glass substrate with the bending area therebetween; a protective layer provided to overlap the bending area and the bezel area; first and second accommodating portions overlapping the protective layer and provided on rear surfaces of the first glass substrate and the first sub-glass substrate; a third accommodating portion provided in the non-display area of the second glass substrate; and a coating layer positioned in the first to third accommodating portions.

Example 2: The display device of Example 1, wherein the first accommodating portion includes a first bending slope provided on the rear surface of the first glass substrate so as to overlap the bending area, and a second bending slope provided on the rear surface of the first sub-glass substrate.

Example 3: The display device of Example 2, wherein the coating layer is positioned on the first bending slope and the second bending slope within the first accommodating portion, and below the protective layer between the first bending slope and the second bending slope.

Example 4: The display device of any of Examples 1 to 3, wherein the second accommodating portion includes a first bezel slope provided on the rear surface of the first glass substrate so as to overlap the bezel area, and a second bezel slope provided on the rear surface of the first sub-glass substrate.

Example 5: The display device of Example 4, wherein the coating layer is positioned on the first bezel slope and the second bezel slope within the second accommodating portion.

Example 6: The display device of any of Examples 1 to 5, wherein the third accommodating portion includes a third bezel slope provided on the rear surface of the second glass substrate so as to overlap the bezel area.

Example 7: The display device of Example 6, wherein the coating layer is positioned on the third bezel slope within the third accommodating portion.

Example 8: The display device of any of Examples 1 to 7, wherein the first accommodating portion has a first width, the second accommodating portion has a second width and the third accommodating portion has a third width.

Example 9: The display device of Example 8, wherein the first width of the first accommodating portion is equal to or greater than the second width of the second accommodating portion.

Example 10: The display device of Example 8 or 9, wherein the first width of the first accommodating portion is equal to or greater than the third width of the third accommodating portion.

Example 11: The display device of any of Examples 1 to 10, wherein the protective layer includes a first protective layer and a second protective layer.

Example 12: The display device of Example 11, wherein the first protective layer overlaps a first flat surface of the first glass substrate and a second flat surface of the first sub-glass substrate by a predetermined area.

Example 13. The display device of Example 11 or 12, wherein the second protective layer overlaps a region extending in a direction toward the display area, of the bezel area of the non-display area of the first glass substrate, and wherein the second protective layer also overlaps a region extending in a direction toward a driving circuit area, of the first sub-glass substrate.

Example 14: The display device of any of Examples 1 to 13, wherein the protective layer includes a material having resistance to a glass etchant.

Example 15: The display device of any of Examples 1 to 14, wherein the protective layer is formed of at least one of a metal and an organic material.

Example 16: The display device of Example 15, wherein the organic material includes at least one of a silicone-based organic material, urethane, polyimide, and photo-acrylic, and the metal includes at least one of chromium (Cr), aluminum (Al), platinum (Pt), and nickel (Ni).

Example 17: The display device of any of Examples 1 to 16, further comprising: a thin film transistor positioned on the first glass substrate; a black matrix positioned on the second glass substrate; a color filter layer positioned between portions of the black matrix; a liquid crystal layer positioned between the first glass substrate and the second glass substrate; and a light source positioned below the first glass substrate.

Example 18: A display device comprising: a first glass substrate including a bezel area and a bending area overlapping an etching hole region, and a display area surrounded by the bezel area; a second glass substrate provided above the first glass substrate so as to overlap the first glass substrate with a certain gap therebetween; a first sub-glass substrate provided below the first glass substrate so as to overlap the first glass substrate with the bending area therebetween; a thin film transistor provided on the first glass substrate; a black matrix and a color filter layer provided on the second glass substrate; a liquid crystal layer positioned between the first glass substrate and the second glass substrate; a protective layer provided on the first glass substrate and the first sub-glass substrate in the bending area and the bezel area overlapping the etching hole region; a first slope and a second slope overlapping the protective layer and provided on rear surfaces of the first glass substrate and the first sub-glass substrate; a third slope provided in the bezel area of the second glass substrate; and a coating layer positioned on the first slope, the second slope, and the third slope.

Example 19: The display device of Example 18, further comprising: a link line positioned on the protective layer.

Example 20: The display device of Example 19, wherein the bending area has a dummy coating layer to protect the link line.

Example 21: The display device of any of Examples 18 to 20, wherein the first slope includes a first bending slope and a second bending slope provided to face each other on the rear surfaces of the first glass substrate and the first sub-glass substrate overlapping the bending area.

Example 22: The display device of any of Examples 18 to 21, wherein the second slope includes a first bezel slope and a second bezel slope provided on one side of the rear surfaces of the first glass substrate and the first sub-glass substrate overlapping the bezel area.

Example 23: The display device of any of Examples 18 to 22, wherein the third slope includes a third bezel slope provided on one side of a rear surface of the second glass substrate overlapping the bezel area.

Example 24: The display device of any of Examples 18 to 23, wherein the coating layer provided on the third slope further includes a dummy seal pattern.

Example 25: The display device of any of Examples 18 to 24, wherein the protective layer includes a material having resistance to a glass etchant, and/or is formed of at least one of a metal and an organic material.

Example 26: The display device of Example 25, wherein the organic material includes at least one of a silicone-based organic material, urethane, polyimide, and photo acrylic, and the metal includes at least one of chromium (Cr), aluminum (Al), platinum (Pt), and nickel (Ni).

Example 27: The display device of any of Examples 18 to 26, wherein the third slope overlaps the black matrix positioned in the bezel area of the second glass substrate.

Example 28: A display device comprising: a first glass substrate having a first flat surface and first rear surface and including a display area and a non-display area having a bezel area surrounding the display area and a bending area; a second glass substrate facing the first flat surface of the first glass substrate; a first sub-glass substrate facing the first rear surface of the first glass substrate; a protective layer connecting the first glass substrate and the first sub-glass substrate in the bending area; first and second ends overlapping the protective layer and provided on rear surfaces of the first glass substrate and the first sub-glass substrate; a third end provided in the non-display area of the second glass substrate; and a first coating layer contacted in the first and third ends.

## Claims

1. A display device (10) comprising:
a first glass substrate (110) including a display area (DA) and a non-display area (NDA), wherein the non-display area (NDA) has a bezel area (BZ) and a bending area (BA), and wherein the bezel area (BZ) is disposed around the display area (DA);
a second glass substrate (210) provided above the first glass substrate (110) so as to overlap the first glass substrate (110), wherein the second glass substrate (210) is spaced apart from the first glass substrate (110) in a thickness direction with a gap therebetween;
a first sub-glass substrate (120) provided below the first glass substrate (110) of the non-display area (NDA) so as to overlap the first glass substrate (110) with the bending area (BA) therebetween;
a protective layer (114, 116) that overlaps the bending area (BA) and the bezel area (BZ);
first and second accommodating portions (EH1, EH2) overlapping the protective layer (114, 116) and provided on rear surfaces (110d, 120d) of each of the first glass substrate (110) and the first sub-glass substrate (120);
a third accommodating portion (EH3) provided in the non-display area (NDA) of the second glass substrate (210); and
a coating layer (172, 174, 290) positioned in the first to third accommodating portions (EH1, EH2, EH3).

2. The display device (10) of claim 1, wherein the first accommodating portion (EH1) includes a first bending slope (110b) provided on the rear surface (110d) of the first glass substrate (110) so as to overlap the bending area (BA), and a second bending slope (120b) provided on the rear surface (120d) of the first sub-glass substrate (120).

3. The display device (10) of claim 2, wherein the coating layer (172, 174, 290) is positioned on the first bending slope (110b) and the second bending slope (120b) within the first accommodating portion (EH1), and below the protective layer (114, 116) between the first bending slope (110b) and the second bending slope (120b).

4. The display device (10) of any of claims 1 to 3, wherein the second accommodating portion (EH2) includes a first bezel slope (110c) provided on the rear surface (110d) of the first glass substrate (110) so as to overlap the bezel area (BZ), and a second bezel slope (120c) provided on the rear surface (120d) of the first sub-glass substrate (120).

5. The display device (10) of claim 4, wherein the coating layer (172, 174, 290) is positioned on the first bezel slope (110c) and the second bezel slope (120c) within the second accommodating portion (EH2).

6. The display device (10) of any of claims 1 to 5, wherein the third accommodating portion (EH3) includes a third bezel slope (210c) provided on a rear surface (210d) of the second glass substrate (210) so as to overlap the bezel area (BZ).

7. The display device (10) of claim 6, wherein the coating layer (172, 174, 290) is positioned on the third bezel slope (210c) within the third accommodating portion (EH3).

8. The display device (10) of any of claims 1 to 7, wherein the first accommodating portion (EH1) has a first width (W1), the second accommodating portion (EH2) has a second width (W2) and the third accommodating portion (EH3) has a third width (W3).

9. The display device (10) of claim 8, wherein the first width (W1) of the first accommodating portion (EH1) is equal to or greater than the second width (W2) of the second accommodating portion (EH2), and/or
wherein the first width (W1) of the first accommodating portion (EH1) is equal to or greater than the third width (W3) of the third accommodating portion (EH3).

10. The display device (10) of any of claims 1 to 9, wherein the protective layer (114, 116) includes a first protective layer (114) and a second protective layer (116).

11. The display device (10) of claim 10, wherein the first protective layer (114) overlaps a first flat surface (110a) of the first glass substrate (110) and a second flat surface (120a) of the first sub-glass substrate (120) by a predetermined area.

12. The display device (10) of claim 10 or 11, wherein the second protective layer (116) overlaps a region extending in a direction toward the display area (DA), of the bezel area (BZ) of the non-display area (NDA) of the first glass substrate (110), and
wherein the second protective layer (116) also overlaps a region extending in a direction toward a driving circuit area (DCA), of the first sub-glass substrate (120).

13. The display device (10) of any of claims 1 to 12, wherein the protective layer (114, 116) includes a material having resistance to a glass etchant.

14. The display device (10) of any of claims 1 to 13, wherein the protective layer (114, 116) is formed of at least one of a metal and an organic material,
wherein, preferably, the organic material includes at least one of a silicone-based organic material, urethane, polyimide, and photo-acrylic, and the metal includes at least one of chromium, aluminum, platinum, and nickel.

15. The display device (10) of any of claims 1 to 14, further comprising:
a thin film transistor (130) positioned on the first glass substrate (110);
a black matrix (220) positioned on the second glass substrate (210);
a color filter layer (230) positioned between portions of the black matrix (220);
a liquid crystal layer (250) positioned between the first glass substrate (110) and the second glass substrate (210); and
a light source positioned below the first glass substrate (110).
